# EUROPEAN PATENT APPLICATION

(11) **EP 2 565 239 A2**
(43) Date of publication of application: **06.03.2013**
(21) Application number: 11729432.2
(22) Date of filing: 28.04.2011
(51) Int. Cl.: C09D 5/00, C09D 5/02, B05D 1/32, C09D 191/06

(54) **ANTI-GRAFFITI EMULSIONS HAVING A MOISTURE BARRIER PROPERTY**

(30) Priority: 28.04.2010 ES 201030620
(71) Applicant: Repsol Lubricantes y Especialidades, S.A., 28045 Madrid (ES)
(72) Inventor: DABRIO RAMOS, Javier, E-28042 Madrid (ES); MÚGICA GARAY, Ramón, E-28042 Madrid (ES); ASTUDILLO CAMPILLO, Mª Luisa, E-28042 Madrid (ES)
(74) Representative: Pons Ariño, Maria Purificación
(86) International application number: PCT/ES2011/070305
(87) International publication number: WO 2011/135149

(57) **Abstract**

The invention relates to anti-graffiti emulsions comprising at least one type of wax, oil, additives and at least one carrier or excipient. In addition, the invention relates to a method for preparing said anti-graffiti emulsion, a method for applying same and a method for cleaning and recovering the protective effect of graffitied surfaces. Finally, the invention relates to the use of the anti-graffiti emulsions to protect all types of surfaces against graffiti and posters.

## Description

The present invention relates to new formulations of products for protecting surfaces and decorative elements from unwanted paint (including spray paints or graffiti), which have an added anti-humidity effect and are formulated in the form of aqueous emulsions, due to which they do not contain organic solvents and are therefore environmentally friendly and safe to use. Said protective aqueous emulsions are preventive products, i.e. they must be applied before the unwanted paint is produced, do not alter the colour or appearance of the treated surface, on remaining thereon as a transparent film once applied and dry and, finally, are "sacrificial", i.e. they create a physical barrier between the surface and/or inks which is easy to remove and avoids deterioration of the surface by preventing the paint from penetrating said barrier. They are formulated using waxes, oils and additives that confer stable properties.

Additionally, the present invention also relates to a process for preparing anti-graffiti emulsions, to the method for impregnating the surfaces or elements to be protected, to the method for cleaning the painted surfaces and to the use thereof as protection against unwanted paint.

### PRIOR ART

In recent years, a significant increase in the deterioration of building and monument facades due to unwanted paint, mainly graffiti (spray paints), which are produced in an uncontrolled manner and are difficult to avoid. The action of the unwanted paint, in conjunction to the aggressiveness of the processes used for cleaning thereof, which normally involve, independently or jointly, sandblasting, highly pressurised water and high temperatures and chemical products (such as chemical paint strippers, acidic and aggressive products such as sosa, etc.) which, on one hand, wear facade surfaces and, on the other, generate non-environmentally friendly residue and are hazardous to use due to their chemical nature and/or inflammable properties, all form part of the causes of said physical deterioration of surface constituent components.

In general, water-based systems lack the excellent resistance properties of organic-type solvent-based systems, necessary for coating substrates subjected to extreme wear and tear (heavy-duty applications).

US Patent 5798406 discloses fluorinated (meth)acrylate aqueous latices that provide hydrophobic coatings wherein defined fluorinated monomers are used, particularly 2,2,2-trifluoroethyl methacrylate, as sole fluorocomonomer(s) in emulsion polymerisation to form the latices and are distributed statistically in particles formed in a one-step process or in the shell of a core-shell or core-intermediate layer-shell type particle. There is no reference to anti-graffiti or heavy duty properties, no mention is made of post-crosslinking the applied coating, and only generalised applications such as building paints, leather and wood varnishes and textile or leather dressings are mentioned in the description, with textile and leather treatment and house paints being exemplified. The option of crosslinking for the purpose of increasing the mass of the emulsion particles during the polymerisation (but not on coating formation) is mentioned, using a small amount (up to 3% weight of total monomers) of a crosslinking comonomer.

US Patent 5346949 discloses a coating composition having oil- and water-repellent properties and comprising an emulsion polymer formed from a perfluoro-alkyl-acrylate monomer, and unsaturated acid and hydroxyl functional monomers, and a cationic water-soluble salt. Crosslinkability of the composition by adding, inter alia, a blocked isocyanate is mentioned as an option. The fluoromonomer requires 6-12 carbon atoms in the perfluoroalkyl group to achieve the required repellant properties, and the monomer emulsion must be refined to below 0.3 microns using ultrasonic or high pressure homogenisation equipment before commencing the polymerisation - presumably because the known very low solubility of such higher perfluoroacrylates otherwise vitiates polymerisation with the comonomers.

US Patent 5340400 discloses curable coating compositions based on hydroxyfunctional polyacrylates and polyisocyanates which crosslink after being applied to a substrate to form scratch and heat resistant coatings. There is no mention or exemplification that the polyacrylate component contains fluoro groups in any guise or of any reference to anti-graffiti properties.

In this regard, effective inexpensive and ecological solutions based on protective coatings which are easy to apply and prevent surface deterioration by reducing the aggressiveness of the method for cleaning graffiti, when these occur, simultaneously avoiding the generation of environmentally hazardous waste and ensuring personal integrity and safety.

Consequently, it is extremely desirable for said graffiti to be effectively and economically removed as easily and quickly as possible by applying, for example, preventive anti-graffiti coatings which, due to environmental and safety considerations, must preferably derive from compositions formulated in an aqueous medium rather than organic solvent-based compositions.

### DESCRIPTION OF THE INVENTION

The present invention relates to new and surprising formulations that provide exceptionally effective emulsions as anti-graffiti and exceptionally satisfactory coatings for the environment, therefore solving all the aforementioned problems.

In this regard, the present invention relates to a water-based wax emulsion that offers a preventive solution to the problem of graffiti and dirt on surfaces while being environmentally friendly due, among other reasons, to the use of an aqueous rather organic solvent base. The emulsion is applied on the facade or on the surface to be protected, providing a transparent superficial layer which does not alter the colour of the protected surface and which acts as a physical barrier and whereon the unwanted paint is fixed and trapped, preventing it from adhering directly to the wall, therefore protecting it from deterioration. Thus, cleaning is limited to removing the wax layer of the unwanted product (paint/ink) in a much less aggressive manner, without having to apply corrosive chemical products or aggressive/abrasive cleanning methods.

Other features/advantages of this invention are:
● Is a product for coating surfaces that protects the facades and walls of buildings from visual pollution, thus combating vandalism in the form of unwanted drawings and graffiti, which is so widespread in cities in recent years. It seeks to be a more sustainable, environmentally and people friendly alternative than those corrosive chemical products and abrasive methods that are usually used in cleaning processes.This represents a revaluation of the by-products from petroleum refining that make up its composition.
● Does not contain organic solvents or toxic and/or carcinogenic chemical components. It is neither inflammable nor corrosive. It is a formula of water-based liquid mineral paraffins and additives which, due to its composition, is safe to handle, store and transport. It is environmentally friendly and safe for people, and it does not harm the ozone layer. It is applied directly, and no dilution or manipulation of the product is necessary, which underlines how safe it is for people to use.
● Has a double-protection effect: it protects surfaces against paint and graffiti, but also against atmospheric damp thanks to its water-repellent properties. Recommended surfaces for the application of this product are preferably porous materials habitually used in construction, such as brick, concrete, cement, stone, granite, etc.
● It is not a conventional cleaning product. It is a surface protector of a preventive nature. In other words, it should be applied on the surface you want to protect before it is polluted with drawings/graffiti. The surface will maintain its original appearance, as the product is transparent and colourless. In other words, it is a physical protector, which prevents the pollution, in the form of drawings/graffiti, damp or dirt, from penetrating into the protected surface by absorbing it. The pollution is retained in the coating, thus preventing it from penetrating into the surface.
● Moreover, it is a sacrificial product. In other words, it is eliminated together with the drawings/graffiti during the cleaning phase, which means that after that operation, it should be reapplied in order to maintain the protection of the surface against another possible pollution incident.
● Both the application of this product and cleaning of the pollution are carried out in a safe, simple way that is non-aggressive for the surface. This prevents it from being degraded and guarantees the original finish and quality, thereby helping to maintain the conservation of the facade or surface. Hot, pressurised water (hydrocleaning) is sufficient to eliminate the pollution, thus avoiding the use of polluting, corrosive and abrasive chemical products.
● Is recommended as a safe, economical and efficient alternative which is safe for people to use, environmentally friendly and sustainable. The purpose is to protect streets and buildings from vandalism and visual pollution, thereby improving the quality of life in the cities.

Therefore, a first essential aspect of the present invention relates to an anti-graffiti emulsion comprising the following elements:
- at least one wax;
- oil;
- additives; and
- a medium or vehicle

According to a preferred embodiment, the wax is selected from the group formed by waxes of mineral origin (or paraffin waxes), waxes of animal, vegetable and synthetic origin or any combination thereof (see Table 1).

According to a preferred embodiment, waxes of mineral origin are selected from the group formed by petroleum-derived mineral waxes and their by-products, and are preferably selected from among refined, semi-refined, unrefined or residual waxes or any combination thereof.

According to another preferred embodiment, waxes of animal and vegetable origin are selected from the group formed by fatty acids, their natural esters and by-products, beeswax, carnauba wax, candelilla wax or Japan wax and their by-products or any combination thereof.

According to another preferred embodiment, waxes of synthetic origin are selected from the group formed by polyalphaolefin-derived waxes, preferably polyethylenic or polypropylenic waxes or any combination thereof.

According to another preferred embodiment, the waxes are present in a proportion of 5 to 65% by weight, preferably 15 to 50% by weight and more preferably 20 to 45% by weight.

**Table 1. Main waxes that could be present in the invention.**

| Description | Origin | CAS No. |
|---|---|---|
| Paraffin waxes and refined hydrocarbon waxes | Mineral | 8002-74-2 |
| Paraffin waxes and semi-refined hydrocarbons | Mineral | 8002-74-2 |
| Paraffin waxes and microcrystalline hydrocarbon waxes | Mineral | 63231-60-7 |
| Unrefined paraffin waxes (petroleum) | Mineral | 64742-61-6 |
| Residual paraffin waxes (petroleum) | Mineral | 64742-61-6 |
| Paraffin waxes (petroleum), acid-treated | Mineral | 64742-26-3 |
| Paraffin waxes (petroleum), chemically neutralised | Mineral | 64742-33-2 |
| Paraffin waxes (petroleum), microcrystalline, earth-treated | Mineral | 64742-42-3 |
| Paraffin waxes (petroleum), earth-treated | Mineral | 64742-43-4 |
| Paraffin waxes (petroleum) hydrotreated | Mineral | 64742-51-4 |
| Hydrocarbon waxes (petroleum), microcrystalline, hydrotreated | Mineral | 64742-60-5 |
| Hydrocarbon waxes (petroleum), deodorised | Mineral | 85029-72-7 |
| Paraffin waxes (petroleum), acid-treated | Mineral | 90669-47-9 |
| Paraffin waxes (petroleum), with low molecular weight | Mineral | 92045-74-4 |
| Paraffin waxes (petroleum), with low molecular weight, hydrotreated | Mineral | 92045-75-5 |
| Paraffin waxes and micro-hydrotreated waxes | Mineral | 92045-76-6 |
| Paraffin waxes and C19-38 hydrocarbon waxes | Mineral | 97489-05-9 |
| Paraffin waxes (petroleum), treated with active carbon | Mineral | 97862-89-0 |
| Paraffin waxes (petroleum), low molecular weight, treated with active carbon | Mineral | 97862-90-3 |
| Paraffin waxes (petroleum), with low molecular weight, treated with earth | Mineral | 97862-91-4 |
| Paraffin waxes (petroleum), with low molecular weight, treated with silicic acid | Mineral | 97862-92-5 |
| Paraffin waxes (petroleum), treated with silicic acid | Mineral | 97862-93-6 |
| Paraffin waxes and microcrystalline hydrocarbon waxes, treated with active carbon | Mineral | 97862-94-7 |
| Paraffin waxes and microcystalline hydrocarbon waxes, treated with earth | Mineral | 97862-95-8 |
| Paraffin waxes and microcrystalline hydrocarbon waxes, treated with silicic acid | Mineral | 97862-96-9 |
| Carnauba wax | Vegetable | 008015-86-9 |
| Candelilla wax | Vegetable | 008006-44-8 |
| Beeswax | Animal | 008012-89-3 |
| Japan wax | Animal | 008001-39-6 |
| Montanic waxes | Vegetable | 008002-53-7 |
| Stearic acid | Animal/Vegetable | 000057-11-4 |
| Polyethylene waxes | Synthetic | 09002-88-4 |
| Synthetic waxes | Synthetic | 8002-74-2 |
| Chlorinated waxes | Synthetic | 63449-39-8 |

According to another preferred embodiment, the oil is selected from the group formed by animal, vegetable and mineral oils or any combination thereof and is present in a proportion of 0 to 60% by weight, preferably 0 to 25% by weight and more preferably 1 to 15% by weight.

According to another preferred embodiment, the additives, which confer stability to the mixture and bring other added-value properties, such as their pH, fungicide action and/or anti-foam action, are selected from the group formed by non-ionic emulsifiers, ionic emulsifiers and their counter-ions, tensioactive agents, non-tensioactive stabilisers, conventional water-based oil emulsion stabilisers, fungicide, anti-foam or other type of fixing additives, or any combination thereof. These compounds are present in a proportion of 0.2 to 20% by weight, preferably 1 to 10% by weight and more preferably 2 to 7% by weight.

According to another preferred embodiment, the medium or carrier that serves to facilitate transport, handling and application of the mixture of the aforementioned elements is composed of treated water of the demineralised type and is present in a proportion of 34 to 95% by weight, preferably 45 to 80% by weight and more preferably 55 to 75% by weight.

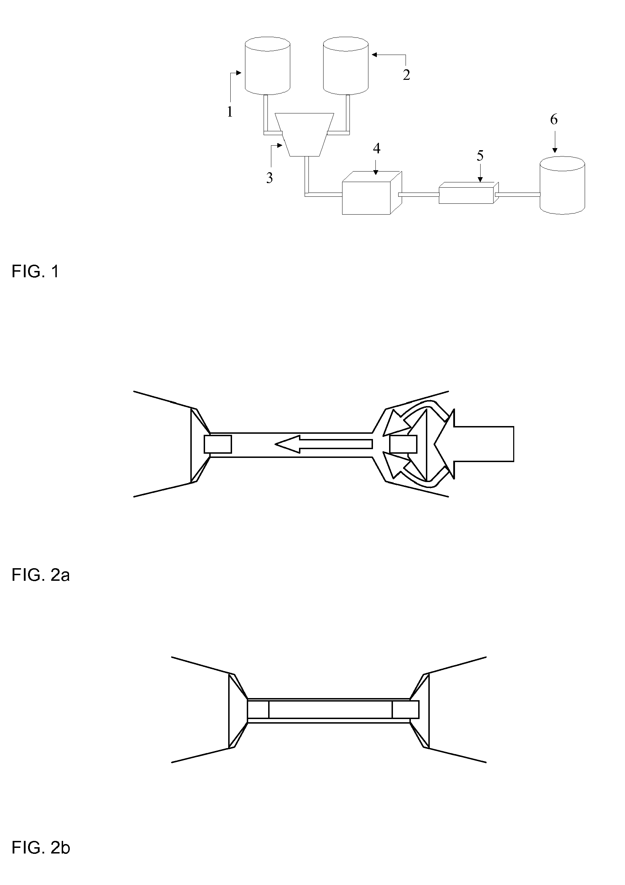

A second basic aspect of the present invention relates to a process for obtaining the anti-graffiti emulsion (figure 1), which allows stable emulsions to be obtained using the previously described components, having an average particle size equal to or less than 1µm and a narrow, monomodal particle size distribution (low polydispersity), comprising the following independent and necessary steps:
a. production of a hot pre-emulsion;
b. high-pressure homogenisation of the pre-emulsion produced in the previous step; and
c. rapid cooling.

According to a preferred embodiment, the pre-emulsion formation step consists of:
- Melting the wax at approximately 70°C.
- Adding the oil, emulsifiers and rest of the non-water-soluble additives (if any). In general, these products are also solids with a waxy appearance and a slightly lower melting point than paraffin.
- Gently shaking the mixture, maintaining the temperature at 70°C.
- Heating the water (carrier) at 70°C.
- Adding a counter-ion of the ionic emulsifier and the rest of the water-soluble additives (if any).
- Mixing together the aqueous solution and the wax and shaking vigorously to form the ionic emulsifier in situ.

At this point a mixture of two immiscible phases takes place, where the emulsifiers adapt to the corresponding interfaces, forming a pre-emulsion which could be defined as a very gross and unstable emulsion.

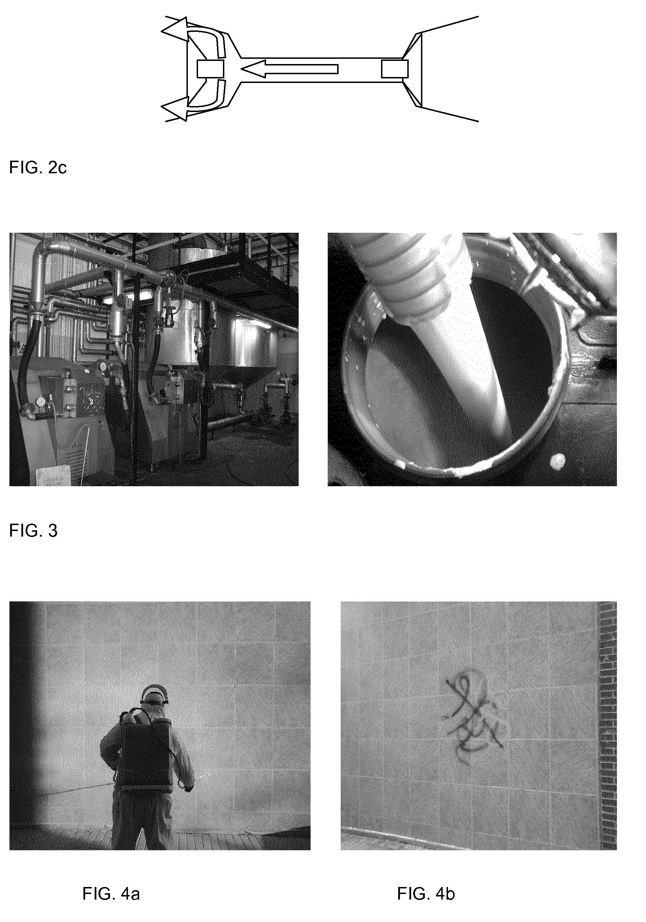

According to a preferred embodiment, homogenisation is carried out using a high-pressure homogeniser, consisting of equipment basically composed of a block with a very narrow pipe, wherethrough the hot pre-emulsion is forced to pass at high pressure. The pipe is controlled by a valve system, the passthrough of which is adjusted based on working pressure. The homogenisation device has a dual-pressure system, composed of two online chambers, where a first chamber applies a pressure of 30-75 bar and a second chamber subsequently applies a pressure of 150-200 bar to said pre-emulsion. We can observe the operation of a high-pressure homogeniser in the diagram of figure 2 (2a, 2b and 2c).

According to another preferred embodiment, once the pre-emulsion has been formed, the particle distribution and size of the mixture are adjusted in a high-pressure homogeniser, where the homogenisation step consists of:
● Step 1. Opening of an inlet valve. The pre-emulsion flows turbulently into the pipe, occupying all the free space and suffering high-skew cutting stress which originates a first particle size adjustment.
● Step 2. Closing of the valve with the liquid inside, causing the pressure to rise sharply in its interior.
● Step 3. Opening of the outlet valve and outflow of the emulsion takes place during the third phase. The skew caused by the passage of the emulsion when said valve is opened due to the high pressure in the pipe finishes adjusting particle size.

Greater particle size adjustment can be achieved by combining inflow pressure with the number of serially disposed blocks. In general, the greater the pressure, the smaller the particle size achieved, while the greater the number of blocks the greater the polydispersity control achieved.

According to another preferred embodiment, the cooling step consists of passing the emulsion formed during independent step b through a heat exchanger having sufficient specific surface area to cool it rapidly and solidify the small paraffin particles.

A third basic aspect of the present invention relates to a method for applying the anti-graffiti emulsion to the surfaces and facades, comprised of the following steps:
- application of the anti-graffiti emulsion to any type of clean surface, preferably dry, particularly on porous mineral surfaces such as concrete, cement, ceramic brick, limestone and sandstone, mineral stuccos, polished marble and granite, etc. using conventional methods such as a diffuser, roller, large brush, fine brush, gun or sprayer, preferably a knapsack sprayer; and
- homogenisation of the distribution and generation of a fine layer of product on the surface treated with the emulsion, preferably by passing a dryer roller which will also remove the drops of water that appear when applying the emulsion; and
- drying of the coating at ambient temperature, protected from the elements.

A fourth basic aspect of the present invention relates to a method for cleaning surfaces with graffiti which have been previously treated with the anti-graffiti emulsion, comprising the following steps:
- addition of water to the paint-stained surface until removing the graffiti together with the coating;
- application of a new layer of anti-graffiti emulsion;
- homogenisation of the distribution using a roller; and
- drying at ambient temperature;

According to a preferred embodiment, the water contains soap.

According to a preferred embodiment, water is added by means of high-pressure jets (cleaning pressure) and a temperature ranging from 40-70°C, preferably 50-60°C.

According to a preferred embodiment, water is added using a brush or any tool which enables rubbing the painted surface, removing the unwanted dirt.

A fifth basic aspect of the present invention relates to the use of the anti-graffiti emulsion on any type of surface against graffiti and sticking of posters.

Throughout the description and claims, the word "comprises" and its variants do not aim to exclude other technical characteristics, additives, components or steps. For persons skilled in the art, other objects, advantages and characteristics of the invention will be partially inferred from the description and partially from the practical application of the invention. The following examples and drawings have been provided by way of illustration and do not limit the present invention.

### DESCRIPTION OF THE DRAWINGS

**Figure 1** shows a system for manufacturing paraffin emulsions. Point 1 represents the aqueous phase, point 2 the paraffin phase, point 3 the formation of a pre-emulsion, point 4 a homogenisation phase, point 5 a cooling step and point 6 the emulsion formation step.
**Figure 2** shows the operation of a high-pressure homogeniser. Figure 2a.- Inflow of pre-emulsion in the high-pressure homogeniser pipe. Figure 2b.-Compression of the pre-emulsion in the high-pressure homogeniser pipe. Figure 2c.- Outflow of pre-emulsion from the high-pressure homogeniser pipe.
**Figure 3** shows a plan view of the paraffin emulsion manufacturing process and outflow of emulsion.
**Figure 4** shows application to a shiny tile surface (a); graffiti after application (b); cleaning process (c); and final result (d).
**Figure 5** shows application to a brick veneer surface (a); graffiti after application (b); cleaning process (c); and final result (d).
**Figure 6** shows application to a granite surface (a) painted after application (b), the cleaning process (c) and final result (d).

### EXAMPLES OF EMBODIMENT

### Example 1: Preparation of an anti-graffiti emulsion.

An anti-graffiti paraffin emulsion is manufactured based on the following formulation:

| | Real quantity (kg) |
|---|---|
| ANTI-FOAM | 1 |
| EMULSIFIER PACKET | 135 |
| WATER | 1,752 |
| pH REGULATOR | 82 |
| EMULSION PARAFFIN | 2,574 |
| | |
| TOTAL | 4,544 |

The paraffin is melted inside the paraffin tank and heated to 70°C. At this temperature, the emulsifier packet (ionic/non-ionic) is added. The mixture is maintained at 70°C.

The water is heated at 70°C in the water tank and the pH regulator is added. It is maintained at this temperature.

The two tanks are mixed in the pre-emulsion tank by means of moderate shaking and maintained at 70°C.

The pre-emulsion is passed through the homogeniser, which has a dual-pressure system composed of two online chambers, where a first chamber applies a pressure of 45 bar to the mixture and where a second chamber subsequently applies a pressure of 150 bar to said mixture.

The resulting emulsion is passed through a heat exchanger to obtain the final emulsion at approximately 30°C.

The resulting emulsion (figure 3) is finally diluted using demineralised water to a content of up to 45% in solids for anti-graffiti testing.

### Example 2: Application of the emulsion to different types of surfaces

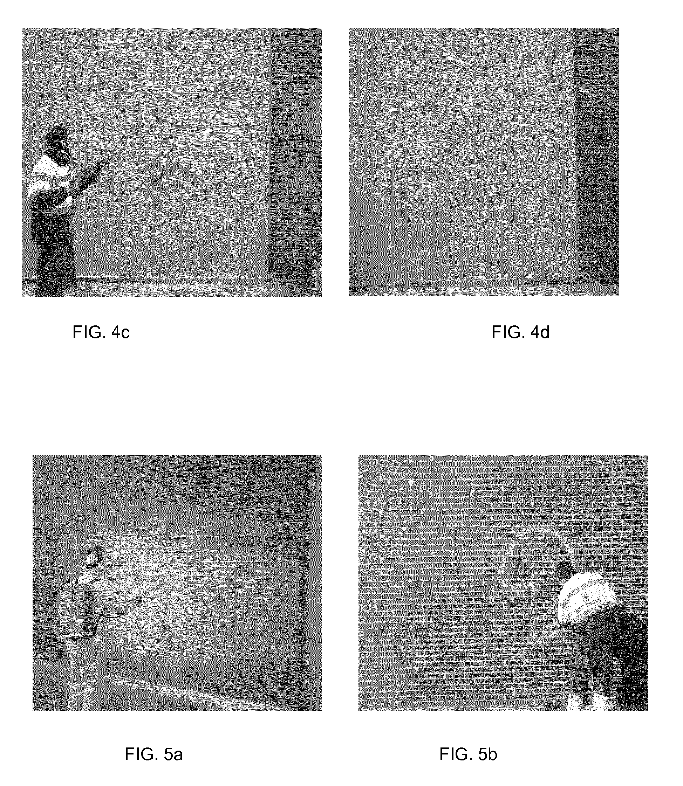

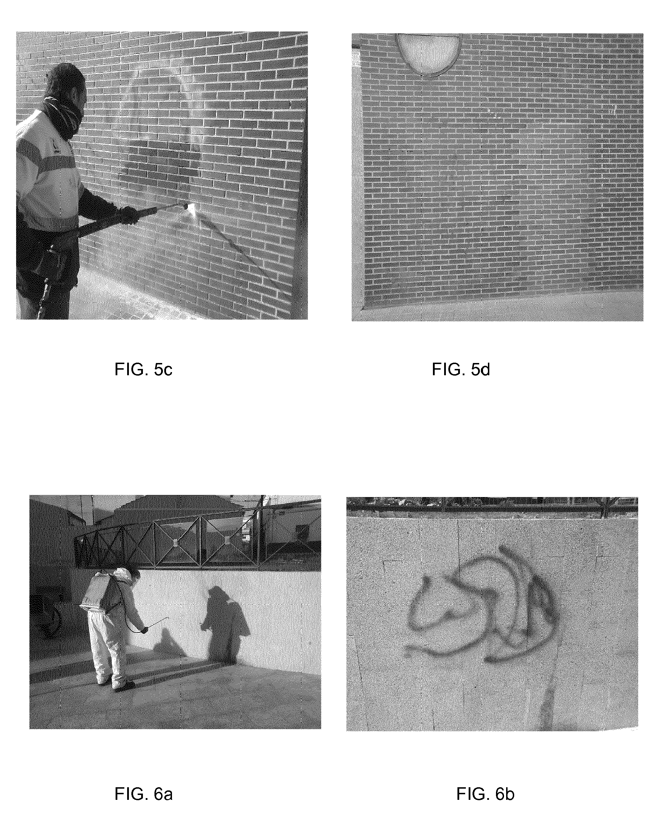

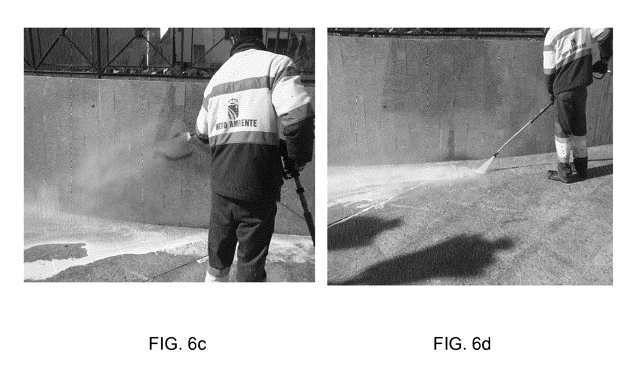

An adequate surface is selected:
- shiny tile surface (figure 4)
- brick veneer surface (figure 5)
- granite surface (figure 6).

The emulsion is preferably added using a knapsack sprayer and the distribution adjusted using a roller or large brush until a homogeneous surface is obtained.

The surface is left to dry. Next, graffiti is painted and left to dry.

The emulsion layer is removed from the surface (together with the graffiti) using hot water jets (45°C for the shiny tile surface, 50°C for the brick veneer surface and 55°C for the granite surface) at cleaning pressure (approximately 80-100 bar), adjusting the temperature and pressure, from lowest to highest, until achieving maximum cleaning efficiency.

## Claims

1. Anti-graffiti emulsion comprising the following elements:
a. at least one wax;
b. oil;
c. additives; and
d. a medium or carrier.

2. Anti-graffiti emulsion, according to claim 1, wherein the wax is selected from the group formed by waxes of mineral origin, waxes of animal, vegetable and synthetic origin or any combination thereof.

3. Anti-graffiti emulsion, according to any of claims 1 or 2, wherein the waxes are selected from the group formed by petroleum-derived waxes of mineral origin selected from the group formed by refined, semi-refined, non-refined and residual paraffins or any combination thereof.

4. Anti-graffiti emulsion, according to any of claims 1 or 2, wherein the waxes of animal and vegetable origin are selected from the group formed by fatty acids, their natural esthers and by-products, beeswax, carnauba wax, candelilla wax or Japan wax and their by-products or any combination thereof.

5. Anti-graffiti emulsion, according to any of claims 1 or 2, wherein the waxes of synthetic origin are selected from the group formed by polyalphaolefin-derived waxes, preferably polyethylene or polypropylene waxes or any combination thereof.

6. Anti-graffiti emulsion, according to any of claims 1 to 5, wherein the waxes are present in a proportion of 5 to 65% by weight, preferably 15 to 50% by weight and more preferably 20 to 45% by weight.

7. Anti-graffiti emulsion, according to claim 1, wherein the oil is selected from among the group formed by mineral oil, vegetable oil, animal oil or any combination thereof.

8. Anti-graffiti emulsion, according to claim 7, wherein the oil is present in a proportion of 0 to 60% by weight, preferably 0 to 25% by weight and more preferably 1 to 15% by weight.

9. Anti-graffiti emulsion, according to claim 1, wherein the additives are selected from among the group formed from non-ionic emulsifiers, ionic emulsifiers and their counter-ions, tensioactive agents, non-tensioactive stabilisers, conventional water-based oil emulsions, fungicide, anti-foam or other type of fixing additives, or any combination thereof.

10. Anti-graffiti emulsion, according to claim 9, wherein the additives are present in a proportion of 1 to 20% by weight, preferably 1 to 10% by weight and more preferably 2 to 7% by weight.

11. Anti-graffiti emulsion, according to claim 1, wherein the medium or carrier is demineralised and/or deionised and/or decalcified water.

12. Anti-graffiti emulsion, according to claim 11, wherein the medium or carrier is present in a proportion of 34 to 95% by weight, preferably 45 to 80% by weight and more preferably 55 to 75% by weight.

13. Process for obtaining an anti-graffiti emulsion, according to any of claims 1 to 12, which comprises the following steps:
a. production of a hot pre-emulsion;
b. homogenization of the pre-emulsion of the previous step; and
c. cooling.

14. Process for obtaining an anti-graffiti emulsion, according to claim 13, wherein the pre-emulsion formation step comprises the following substeps:
a. melting of the wax at 70°C;
b. addition of the oil, emulsifiers and, optionally, the non-water-soluble additives;
c. gentle shaking and maintaining and 70°C;
d. heating of the carrier at 70°C;
e. addition of a counter-ion of the ionic emulsifier to the hot carrier and, optionally, water-soluble additives; and
f. mixing of the aqueous solution resulting from substep e) with the wax resulting from substep c) and shaking.

15. Process, according to claim 13, wherein the pre-emulsion homogenisation step comprises adjusting mixture particle distribution and size.

16. Process, according to claim 13, wherein the cooling step consists of passing the emulsion formed through a heat exchanger.

17. Method for applying the anti-graffiti emulsion which comprises the following steps:
a. application of the anti-graffiti emulsion of claims 1 to 12 using conventional means to any type of surface, preferably porous mineral materials and preferably using a sprayer;
b. homogenisation of the distribution; and
c. drying at ambient temperature.

18. Method for cleaning and restoring the protection of graffiti-painted surfaces treated with the anti-graffiti emulsion, according to any of claims 1 to 12, which comprises the following steps:
a. addition of water to the graffiti-impregnated surface and removal of the graffiti together with the anti-graffiti coating;
b. application of the anti-graffiti emulsion;
c. homogenisation of the distribution; and
d. drying at ambient temperature.

19. Method for cleaning graffiti-painted surfaces treated with the anti-graffiti emulsion, according to claim 18, wherein the water contains soap.

20. Method for cleaning graffiti-painted surfaces treated with the anti-graffiti emulsion, according to claim 18, wherein a cleaning tool is used to rub and remove the paint together with the anti-graffiti protection layer, preferably using a cleaning brush.

21. Method for cleaning graffiti-painted surfaces treated with the anti-graffiti emulsion, according to any of claims 18 or 19, wherein the water is added at high-pressure and at a temperature ranging between 40°C and 70°C, preferably between 50°C and 60°C.

22. Use of the anti-graffiti emulsion, according to any of claims 1 to 12, for dual protection against humidity and graffiti and sticking of posters on any type of surface, preferably porous mineral materials.

23. Use of the anti-graffiti emulsion, according to any of claims 1 to 12, for protection against sticking of posters on any type of surface, preferably porous mineral materials.
